# EUROPÄISCHE PATENTSCHRIFT

(11) **EP 3 178 883 B1**
(45) Veröffentlichungstag und Bekanntmachung des Hinweises auf die Patenterteilung: **06.02.2019**
(21) Anmeldenummer: 16202356.8
(22) Anmeldetag: 06.12.2016
(51) Int. Cl.: C08L 67/02

(54) **ZUSAMMENSETZUNG FÜR DIE HERSTELLUNG VON FORMKÖRPERN AUF DER BASIS VON TEILKRISTALLINEM POLYETHYLENTEREPHTHALAT**
COMPOSITION FOR THE PREPARATION OF MOULDED ARTICLES ON THE BASIS OF A PARTIALLY CRYSTALLINE POLYETHYLENE TEREPHTHALATE
COMPOSITION POUR LA PRODUCTION DE CORPS MOULÉS À BASE DE POLY(TÉRÉPHTALATE D'ÉTHYLÈNE) SEMI-CRISTALLIN

(30) Priorität: 07.12.2015 DE 102015121250
(43) Veröffentlichungstag der Anmeldung: 14.06.2017
(73) Patentinhaber: Etimex Primary Packaging GmbH, 89165 Dietenheim (DE)
(72) Erfinder: Knoblauch, Dominik, 87751 Heimertingen (DE)
(74) Vertreter: Hoeger, Stellrecht & Partner Patentanwälte mbB

(56) Entgegenhaltungen:
- DE-T2- 69 311 223
- JP-A- H0 966 556
- JP-A- S63 135 444
- US-A1- 2003 205 852

## Beschreibung

Die vorliegende Erfindung betrifft eine Zusammensetzung für die Herstellung von Formkörpern auf der Basis von teilkristallinem Polyethylenterephthalat (PET), umfassend mindestens ein PTE, welches aus den Monomeren Terephthalsäure und Ethylenglycol, und optional aus einem oder mehreren weiteren Monomeren, gebildet ist.

Die Erfindung betrifft ferner die Verwendung einer solchen Zusammensetzung zur Herstellung von Formkörpern auf der Basis von teilkristallinem PET, insbesondere von Behältern für die Nahrungsmittelindustrie, sowie die entsprechend hergestellten Formkörper.

Schließlich betrifft die Erfindung auch ein Verfahren zur Herstellung eines Formkörpers auf der Basis von teilkristallinem PET unter Verwendung einer solchen Zusammensetzung.

Teilkristallines PET (auch als C-PET bezeichnet) unterscheidet sich von amorphem PET (A-PET) durch eine wesentlich höhere Temperaturbeständigkeit. Während das teilkristalline PET einen Schmelzpunkt im Bereich von 250 bis 260 °C aufweist, erfolgt bei amorphem PET eine Erweichung bereits im Bereich zwischen 60 und 80 °C (Glasübergangstemperatur). Dadurch eignen sich Formkörper aus C-PET für entsprechende Anwendungen bei hohen Temperaturen, insbesondere als Behälter für die Nahrungsmittelindustrie, in denen Lebensmittel (typischerweise Fertiggerichte) verkauft werden, die vom Konsumenten dann im Backofen zubereitet bzw. erwärmt werden. Amorphes PET, welches insbesondere für die Herstellung von Einweg- oder Mehrweg-Getränkeflaschen verwendet wird, ist für diesen Zweck ungeeignet.

Um die erforderliche Kristallinität beim Abkühlen des PET aus der Schmelze zu erreichen, können der PET-Zusammensetzung verschiedene Additive als Nukleierungsmittel zugesetzt werden. Einen Einfluss auf die Kristallisation hat auch das Molekulargewicht des PET, welches mit der intrinsischen Viskosität korreliert. Durch ein geringeres Molekulargewicht wird die Kristallisation begünstigt, andererseits führt ein geringes Molekulargewicht aber auch zu einer tendenziell niedrigeren Kälteschlagzähigkeit der hergestellten Formkörper. Dies ist insbesondere im Fall der oben erwähnten Nahrungsmittelbehälter nachteilig, da diese häufig auch für Tiefkühlprodukte verwendet werden.

Die DE 693 11 223 T2 offenbart Polyethylenterephthalat, welches mit einem Schagzähigkeitsmodifikator, einer geringen Menge an Polycarbonat und einem Nukleierungsmittel modifiziert ist. Die Oberflächen- und Entformungseigenschaften sind ferner durch die Anwesenheit einer geringen Menge an Ethylen/Acrylat-Copolymer verbessert.

Die US 2003/205852 A1 offenbart Polyesterzusammensetzungen für die Herstellung von Behältern und ähnlichen Formteilen mittels Thermoformen. Die Zusammensetzung umfasst einen thermoplastischen Polyester, einen Schlagzähigkeitsmodifikator und eine Komponente, welche die Kristallisationsrate von Polyester erhöht, und ausgewählt ist aus Homo- und Copolymeren von Polytetramethylenterephthalat.

Die JP S63-135444 A offenbart eine Zusammensetzung zur Herstellung von Formteilen umfassend 99,6 bis 94 Gew.% eines thermoplastischen Polyesterharzes, 0,2 bis 1 Gew.% Polyethylenharz und 0,2 bis 5 Gew.% organisches Pigment oder Füllstoff mit einer Kristallinität von mindestens 15 g.

Vor dem Hintergrund dieser gegenläufigen Effekte liegt der Erfindung die Aufgabe zugrunde, eine Zusammensetzung auf der Basis von teilkristallinem PET bereitzustellen für die Herstellung von Formkörpern, die einerseits eine hohe Temperaturbeständigkeit bis ca. 250 °C aufweisen, und andererseits eine ausreichende Kälteschlagzähigkeit, d.h. eine gute Bruchfestigkeit bei Temperaturen von ca. -20 °C.

Diese Aufgabe wird erfindungsgemäß gelöst durch die Zusammensetzung gemäß Anspruch 1.

Es wurde überraschenderweise gefunden, dass mit Hilfe der genannten Additive in dieser Kombination und mit diesen Mengenanteilen der Komponenten die obigen Anforderungen in einem hohen Ausmaß erfüllt werden, und dass aus der erfindungsgemäßen Zusammensetzung Formkörper mit einer verbesserten Wärmeformbeständigkeit hergestellt werden können, die gleichzeitig eine gute Kälteschlagzähigkeit aufweisen.

Die verschiedenen Additive in der erfindungsgemäßen Zusammensetzung wirken bei der Verbesserung der Eigenschaften des teilkristallinen PET in synergetischer Weise zusammen. Dabei wirkt sowohl das Schichtsilikat als auch das Polyolefin u.a. als Nukleierungsmittel, d.h. diese Additive begünstigen das Erreichen des erforderlichen Kristallinitätsgrades bei der Herstellung der Formkörper. Der Modifikator bewirkt u.a. eine homogenere Verteilung des Schichtsilikats und des Polyolefins in dem PET, wodurch die mechanischen Eigenschaften des hergestellten Formkörpers verbessert werden.

Gemäß einer bevorzugten Ausführungsform der Erfindung umfasst die Zusammensetzung folgende Mengenanteile der einzelnen Komponenten:
- 1 bis 5 Gew.%, bevorzugt 1 bis 3,5 Gew.%, des Modifikators,
- 1 bis 7 Gew.%, bevorzugt 2,5 bis 5 Gew.%, des Schichtsilikats; und
- 1,2 bis 3,5 Gew.%, des Polyolefins.

Bei dem PET handelt es sich günstigerweise um ein Homopolymer, welches ausschließlich aus den Monomeren Terephthalsäure und Ethylenglycol gebildet ist. Homopolymere lassen sich in der Regel besser kristallisieren als Copolymere. Alternativ oder zusätzlich können aber auch solche Copolymere im Rahmen der Erfindung eingesetzt werden, insbesondere ein PET, welches als weitere Monomere Isophthalsäure, Diethylenglycol und/oder 1,4-Cyclohexandimethanol enthält.

Die intrinsische Viskosität des PET liegt in diesem Fall typischerweise im Bereich von 0,85 bis 0,95 dl/g. Diese Werte sind höher als bei den Polymeren, die üblicherweise für die Herstellung von Formkörpern aus amorphem PET verwendet werden, wodurch die mechanischen Eigenschaften, insbesondere auch die Kälteschlagzähigkeit, verbessert werden können.

Der Modifikator in der erfindungsgemäßen Zusammensetzung ist ein Polymer, welches eine Reaktivität gegenüber PET aufweist. Durch den Modifikator wird eine homogenere Verteilung und bessere Anbindung der anderen Additive in der PET-Matrix ermöglicht und dadurch die mechanischen Eigenschaften des hergestellten Formkörpers verbessert. Die Reaktivität gegenüber PET wird dadurch erreicht, dass der Modifikator ein Epoxidgruppen enthaltendes Polymer ist.

Besonders bevorzugt ist es, wenn der Modifikator ein Glycidylmethacrylat enthaltendes Polymer ist, bevorzugt ein Ethylen-Glycidylmethacrylat-Copolymer, ein Ethylen-Ethylacrylat-Glycidylmethacrylat-Terpolymer oder ein Ethylen-Butylacrylat-Glycidylmethacrylat-Terpolymer.

Das Schichtsilikat in Partikelform, das in der erfindungsgemäßen Zusammensetzung enthalten ist, umfasst vorzugsweise Talkum. Es hat sich gezeigt, dass Talkum zusätzlich zu seiner Wirkung als Nukleierungsmittel auch zur Verbesserung der mechanischen Steifigkeit des hergestellten Formkörpers, insbesondere auch bei hohen Temperaturen, beiträgt, wenn es in höheren Gewichtsanteilen (ab ca. 0,5 Gew.%) eingesetzt wird. Da Talkum (oder ein anderes Schichtsilikat) auch die Dichte der Zusammensetzung erhöht, kann bei einem entsprechend hohen Anteil die Wanddicke des hergestellten Formkörpers reduziert werden, bei gleichbleibendem Gewicht und mechanischer Steifigkeit im Vergleich zu einem Formkörper ohne Talkum.

Die Partikel des Schichtsilikats weisen bevorzugt eine mittlere Partikelgröße von 2 bis 20 µm auf, weiter bevorzugt von 3 bis 7 µm. Insbesondere bei Partikelgrößen im oberen Größenbereich führt der Zusatz des Schichtsilikats auch zu einer Verringerung der Sauerstoffdurchlässigkeit des hergestellten Formkörpers, was insbesondere im Fall von Behältern für die Nahrungsmittelindustrie einen weiteren Vorteil darstellt.

Das Polyolefin kann bei der erfindungsgemäßen Zusammensetzung, neben seiner Wirkung als Nukleierungsmittel, ebenfalls zur Verbesserung der Kälteschlagzähigkeit der hergestellten Formkörper beitragen. Das Polyolefin ist vorzugsweise ein Homopolymer, und ist bevorzugt ausgewählt aus Polyethylen, insbesondere LDPE, LLDPE oder ULDPE, Polypropylen und Mischungen hiervon. Das Polyolefin weist bevorzugt ein Molekulargewicht von über 100.000 g/mol auf.

Die erfindungsgemäße Zusammensetzung kann außer den vorstehend beschriebenen Additiven ferner einen oder mehrere Füllstoffe und/oder Pigmente umfassen. Insbesondere kann die Zusammensetzung ein Schwarzpigment enthalten, um die hergestellten Formkörper entsprechend einzufärben.

Die erfindungsgemäße Zusammensetzung eignet sich im besonderen Maße für die Verwendung zur Herstellung von Formkörpern auf der Basis von teilkristallinem PET, insbesondere von Behältern für die Nahrungsmittelindustrie. Wie bereits oben erwähnt, können solche Behälter aufgrund ihrer hohen Temperaturbeständigkeit und mechanischen Steifigkeit, sowie ihrer verbesserten Kälteschlagzähigkeit, in einem Temperaturbereich von etwa -20 bis 250 °C für die Aufbewahrung und Zubereitung von Lebensmitteln verwendet werden.

Ein weiterer Gegenstand der vorliegenden Erfindung ist somit auch ein Formkörper auf der Basis von teilkristallinem PET, insbesondere ein Behälter für die Nahrungsmittelindustrie, welcher aus der erfindungsgemäßen Zusammensetzung hergestellt ist.

Das PET weist in dem Formkörper bevorzugt eine Kristallinität im Bereich von 10 bis 50% auf, weiter bevorzugt von 20 bis 45%.

Der erfindungsgemäße Formkörper ist vorzugsweise ein Behälter, insbesondere eine Schale, ein Teller oder ein Becher, mit einer Wandstärke im Bereich von 0,1 bis 2 mm. Je höher die mechanische Steifigkeit des teilkristallinen PET ist, desto kleiner kann die Wandstärke gewählt werden, was mit einer Kostenersparnis verbunden ist.

Der erfindungsgemäße Formkörper kann zusätzlich zu der Schicht auf Basis von teilkristallinem PET eine oder mehrere weitere Schichten umfassen, insbesondere eine Siegelschicht und/oder eine Schicht auf Basis von PET, die kein Schichtsilikat enthält. Eine Siegelschicht kann insbesondere bei einem Behälter für die Nahrungsmittelindustrie Anwendung finden, um den Behälter mit einer Folie verschließen zu können. Eine solche Siegelschicht macht typischerweise 1 bis 10% der Wandstärke des Formkörpers aus. Eine zusätzliche Schicht auf Basis von PET ohne Schichtsilikat ist vorteilhaft, um Ablagerungen des Schichtsilikats an der Extrusionsdüse während der Extrusion der Zusammensetzung zu vermeiden.

Eine bevorzugte Ausführungsform des erfindungsgemäßen Formkörpers umfasst daher eine mittlere Schicht auf Basis von teilkristallinem PET, bevorzugt mit einer Schichtdicke von 0,5 bis 1,8 mm, und zwei äußeren Schichten auf Basis von PET ohne Schichtsilikat, bevorzugt mit einer Schichtdicke von 20 bis 100 µm. Eine der beiden Außenschichten kann insbesondere eine Siegelschicht sein, die aus einem modifizierten PET mit einem hohen Anteil an Isophthalsäure gebildet ist. Die Außenschichten müssen neben dem PET keine weiteren Komponenten enthalten, ein Zusatz von z.B. Pigmenten ist aber möglich.

Die Erfindung betrifft auch ein Verfahren zur Herstellung eines erfindungsgemäßen Formkörpers auf der Basis von teilkristallinem PET, insbesondere eines Behälters für die Nahrungsmittelindustrie, umfassend die Schritte:
- Extrudieren einer erfindungsgemäßen Zusammensetzung, um eine Folie zu erhalten; und
- Thermoformen der Folie, um den Formkörper zu erhalten.

Wenn der erfindungsgemäße Formkörper außer der Schicht auf Basis von teilkristallinem PET weitere Schichten umfasst, können diese Schichten im Rahmen des erfindungsgemäßen Verfahrens zu einer mehrlagigen Folie coextrudiert werden. Dies gilt insbesondere im Fall von einer oder zwei zusätzlichen Schichten ohne Schichtsilikat, wie oben beschrieben. Durch solche Außenschichten werden Ablagerungen des Silikats an der Extrusionsdüse vermieden, die sonst zu Defekten an der Folie oder sogar zu einem Abriss der Folie führen können.

Die Extrusion wird vorzugsweise bei einer Temperatur von 180 bis 295 °C durchgeführt und die Folie anschließend abgekühlt. Das Abkühlen kann insbesondere mittels Kühlwalzen bei einer Temperatur von 18 bis 35 °C erfolgen.

Der zweite Teil des erfindungsgemäßen Verfahrens, das Thermoformen, erzeugt nicht nur die gewünschte Geometrie des hergestellten Formkörpers, sondern ist auch entscheidend, um im Zusammenspiel mit den Bestandteilen der erfindungsgemäßen Zusammensetzung den erforderlichen Kristallinitätsgrad des PET zu erreichen. Das Thermoformen umfasst vorzugsweise folgende Schritte:
- Vorwärmen der Folie, bevorzugt auf eine Temperatur von 110 bis 125 °C;
- Umformen der Folie mittels eines Vorstreckstempels und einer Heißform, die bevorzugt eine Temperatur von 170 bis 185 °C aufweist; und
- Übertragen des Formteils in eine Kaltform, die bevorzugt eine Temperatur von 20 bis 30 °C aufweist, wobei das PET teilweise kristallisiert.

Durch die Begünstigung der Kristallisation mit Hilfe des Polyolefins und des Schichtsilikats in der erfindungsgemäßen Zusammensetzung kann die Zykluszeit beim Thermoformen verkürzt werden, wodurch eine Kostenersparnis beim Herstellungsverfahren möglich ist.

Neben der Extrusion und dem anschließenden Thermoformen eignet sich die erfindungsgemäße Zusammensetzung aber auch zur Herstellung von Formkörpern mittels anderer Verfahren. Insbesondere kann die erfindungsgemäße Zusammensetzung auch mittels Spritzguss verarbeitet werden.

### Beispiele

Diese und weitere Vorteile der Erfindung werden anhand der nachfolgenden Beispiele unter Bezugnahme auf die Figuren näher beschrieben.

Es zeigen im Einzelnen:
- Fig. 1:: eine perspektivische Darstellung eines erfindungsgemäßen Formkörpers in Form einer Schale für Lebensmittel; und
- Fig. 2:: ein Diagramm zur Sauerstoffdurchlässigkeit verschiedener Formkörper.

### 1. Herstellung von Formkörpern

Formkörper auf der Basis von Teilkristallinen PET wurden aus drei verschiedenen Zusammensetzungen A, B und C hergestellt, deren Komponenten mit den jeweiligen Mengenanteilen in der nachfolgenden Tabelle 1 angegeben sind. Die Zusammensetzungen A und B dienen als Vergleichsbeispiele, wobei das Vergleichsbeispiel A einer C-PET-Standardrezeptur entspricht und das Vergleichsbeispiel B im Hinblick auf eine hohe Kälteschlagzähigkeit optimiert ist. Das Beispiel C entspricht der vorliegenden Erfindung.

**Tabelle 1**

| Komponente | Anteile in Gew.% in den Zusammensetzungen | | |
|---|---|---|---|
| | Vergleichsbeispiel A | Vergleichsbeispiel B | Beispiel C |
| PET-Homopolymer, intrinsische Viskosität 0,95 dl/g | 48,5 | 75,4 | 67,4 |
| PET-Copolymer, Comonomere Isophthalsäure und Diethylenglycol, intrinsische Viskosität 0,8 dl/g | 48,5 | - | 24,2 |
| ULDPE, Dichte 0,911 g/cm³ | 2,0 | 2,0 | 1,0 |
| Schwarzpigment auf Rußbasis | 1,0 | 1,0 | 1,0 |
| Ethylen-Butylacrylat-Glycidylmethacrylat- Terpolymer | - | 3,6 | 1,1 |
| Ethylen-Methylacrylat-Copolymer | - | 18,0 | - |
| Talkum-Partikel, mittlere Partikelgröße 4 µm | - | - | 3,8 |
| LLDPE als Träger der Talkum-Partikel, Dichte 0,915-0,935 g/cm³ | - | - | 1,5 |

Es wurden mittels Coextrusion zweilagige Folien hergestellt, mit der Zusammensetzung A, B bzw. C als erste Schicht und einer Zusammensetzung aus 98,5 Gew.% des PET-Homopolymers und 1,5 Gew.% des Schwarzpigments als zweite Schicht. Die erste Schicht machte jeweils 94 Gew.% und die zweite Schicht 6 Gew.% der Folienmasse aus. Die Schichtdicken sind in der nachfolgenden Tabelle 2 angegeben.

**Tabelle 2**

| | Folie A | Folie B | Folie C |
|---|---|---|---|
| Dicke erste Schicht | 0,937 mm | 0,940 mm | 0,937 mm |
| Dicke zweite Schicht | 0,063 mm | 0,060 mm | 0,063 mm |
| Gesamtdicke der Folie | 1,000 mm | 1,000 mm | 1,000 mm |

Die Extrusion erfolgte jeweils bei einer Temperatur von 180 bis 295 °C mit anschließender Abkühlung über Kühlwalzen bei 18 bis 35 °C.

Aus den Folien mit den Zusammensetzungen A, B und C wurden durch Thermoformen Formkörper hergestellt, wie sie in der Nahrungsmittelindustrie als Behälter verwendet werden, in diesem Fall eine ovale Schale mit einer Länge von ca. 20 cm, einer Breite von ca. 15 cm und einer Tiefe von ca. 5 cm. Dabei wurden die Folien auf 110 bis 125 °C erhitzt und mittels Druckluft bei 2 bis 8 bar mit einem Vorstreckstempel und einer Heißform bei 170 bis 185 °C umgeformt. Anschließend wurde das Formteil aus der Heißform entnommen und in eine Kaltform mit einer Temperatur von 20 bis 30 °C überführt. In der Kaltform wird die Kristallisation gestoppt, um so einen Formkörper auf der Basis von teilkristallinem PET mit einem Kristallisationsgrad von typischerweise 20 bis 45% zu erhalten.

Die beim Ausstanzen der thermogeformten Schalen anfallende Restfolie (Verschnitt) kann wieder dem Ausgangsmaterial für die Extrusion zugeführt werden und dabei bis zu 50% des Ausgangsmaterials ausmachen.

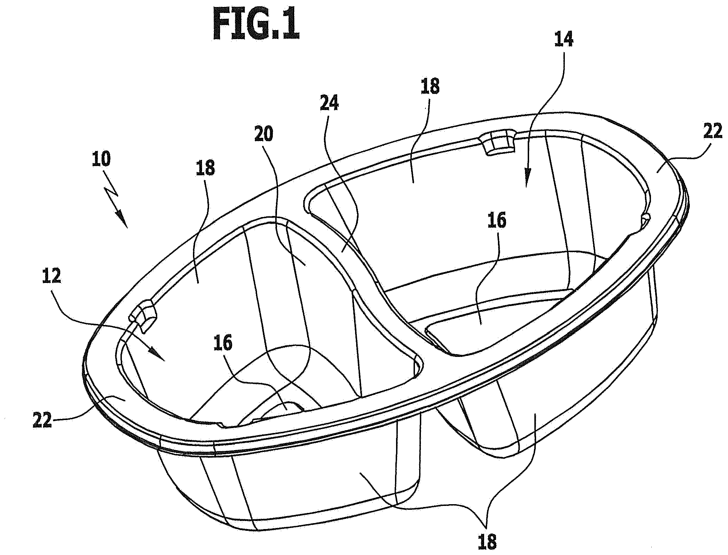

Figur 1 zeigt eine perspektivische Darstellung einer hergestellten Schale 10. Es handelt sich dabei um eine Doppelschale mit zwei voneinander getrennten Aufnahmebereichen 12 und 14, die jeweils einen Boden 16, einen äußeren Wandabschnitt 18 und einen inneren Wandabschnitt 20 aufweisen. Die äußeren Wandabschnitte 18 weisen an ihrem oberen Ende einen umlaufenden, nach außen weisenden Flanschrand 22 auf, der in einen die beiden inneren Wandabschnitte 24 verbindenden Steg übergeht.

Die coextrudierte Folie ist in der Schale 10 so orientiert, dass die erste Schicht mit der erfindungsgemäßen Zusammensetzung nach außen weist, d.h. die zweite Schicht zum Inneren der Aufnahmebereichen 12 und 14 hin orientiert ist. Auf dem Flanschrand 22 und dem Steg 24 kann diese zweite Schicht zum Verschließen der Schale 10 mit einer Siegelfolie genutzt werden.

### 2. Bestimmung der Sauerstoffdurchlässigkeit

Bei den Schalen aus den Zusammensetzungen B und C wurde die Sauerstoffdurchlässigkeit gemäß der Testmethode ISO 15105-2, Annex A über einen Zeitraum von 12 Tagen gemessen. Die Messung erfolgte bei einem Sauerstoffpartialdruck von 0,21 bar, einer Temperatur von 23 °C und einer relativen Feuchte von 50%.

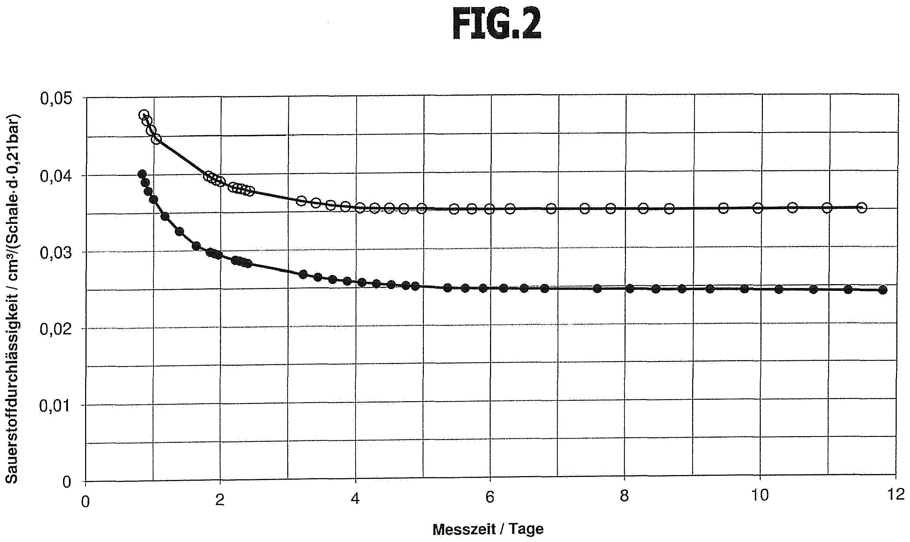

Die Ergebnisse sind in der Figur 2 in einem Diagramm dargestellt, wobei die Zeit in Tagen auf der Abszisse und das Volumen an Sauerstoff in cm³, das pro Tag durch die jeweilige Schale diffundierte, auf der Ordinate aufgetragen ist (d.h. die Sauerstoffdurchlässigkeit in cm³/(Schale·d·0,21bar)). Die Werte für die Schale B sind durch offene Kreise dargestellt und die Werte für die Schale C durch gefüllte Punkte.

Es zeigt sich, dass die erfindungsgemäße Schale gemäß dem Beispiel C aufgrund des relativ hohen Anteils an Talkum-Partikeln eine deutlich geringere Sauerstoffdurchlässigkeit aufweist als die Schale gemäß dem Vergleichsbeispiel B. Dieser Effekt ist insbesondere bei der Verwendung als Behälter für Lebensmittel vorteilhaft.

### 3. Bestimmung des Volumenschwundes bei erhöhter Temperatur

Aufgrund des teilkristallinen PET sind alle hergestellten Formkörper aus den Zusammensetzungen A, B und C grundsätzlich thermisch stabil bis zu einer Temperatur von mindestens 250 °C. Es erfolgt jedoch bei erhöhten Temperaturen ein Volumenschwund.

Der Volumenschwund wurde bei den Schalen aus den Zusammensetzungen B und C ermittelt, indem diese bei 220 °C für 20 min konditioniert wurden. Als Mittelwerte aus mehreren Messungen ergab sich ein Schwund von 8,8% bei der Schale B (Vergleichsbeispiel) und ein Schwund von 5,6% bei der erfindungsgemäßen Schale C, d.h. der Schwundfaktor konnte durch den hohen Anteil an Talkum-Partikeln sehr deutlich um ca. 36% gesenkt werden. Dieser Vergleich zeigt die verbesserte Wärmeformbeständigkeit der erfindungsgemäßen Zusammensetzung.

Durch die höhere Dichte der Talkum enthaltenden Zusammensetzung weist die Schale C bei gleicher Foliendicke ein um ca. 5% höheres Gewicht auf als die Schale B (hier 35,0 g gegenüber 33,2 g). Dies eröffnet z.B. die Möglichkeit, die Foliendicke bei der Schale C um ca. 5% zu reduzieren, so dass bei gleichem Gewicht immer noch eine geringere Sauerstoffdurchlässigkeit und ein geringerer Schwund erzielt werden als bei der Schale B. Oder die Foliendicke wird noch weiter reduziert, bis die Sauerstoffdurchlässigkeit und/oder der Volumenschwund der Schale B entsprechen, um eine weitere Material- und Kostenersparnis zu erreichen.

## Patentansprüche

1. Zusammensetzung für die Herstellung von Formkörpern auf der Basis von teilkristallinem Polyethylenterephthalat (PET), umfassend
- 75 bis 98 Gew.% mindestens eines PET, welches aus den Monomeren Terephthalsäure und Ethylenglycol, und optional aus einem oder mehreren weiteren Monomeren, gebildet ist;
- 0,5 bis 10 Gew.% mindestens eines Modifikators in Form eines Epoxidgruppen enthaltenden Polymers, welches eine Reaktivität gegenüber PET aufweist;
- 0,5 bis 10 Gew.% mindestens eines Schichtsilikats in Partikelform; und
- 0,25 bis 5 Gew.% mindestens eines Polyolefins.

2. Zusammensetzung nach Anspruch 1, umfassend
1 bis 5 Gew.%, bevorzugt 1 bis 3,5 Gew.%, des Modifikators;
- 1 bis 7 Gew.%, bevorzugt 2,5 bis 5 Gew.%, des Schichtsilikats; und
- 1,2 bis 3,5 Gew.%, des Polyolefins.

3. Zusammensetzung nach einem der vorhergehenden Ansprüche, wobei das PET als weitere Monomere Isophthalsäure, Diethylenglycol und/oder 1,4-Cyclohexandimethanol enthält.

4. Zusammensetzung nach einem der vorhergehenden Ansprüche, wobei der Modifikator ein Glycidylmethacrylat enthaltendes Polymer ist, bevorzugt ein Ethylen-Glycidylmethacrylat-Copolymer, ein Ethylen-Ethylacrylat-Glycidylmethacrylat-Terpolymer oder ein Ethylen-Butylacrylat-Glycidylmethacrylat-Terpolymer.

5. Zusammensetzung nach einem der vorhergehenden Ansprüche, wobei das Schichtsilikat Talkum umfasst, und/oder wobei die Partikel des Schichtsilikats eine mittlere Partikelgröße von 2 bis 20 µm aufweist, bevorzugt von 3 bis 7 µm.

6. Zusammensetzung nach einem der vorhergehenden Ansprüche, wobei das Polyolefin ein Homopolymer ist, das bevorzugt ausgewählt ist aus Polyethylen, insbesondere LDPE, LLDPE oder ULDPE, Polypropylen und Mischungen hiervon.

7. Verwendung einer Zusammensetzung nach einem der vorhergehenden Ansprüche zur Herstellung von Formkörpern auf der Basis von teilkristallinem PET, insbesondere von Behältern für die Nahrungsmittelindustrie.

8. Formkörper auf der Basis von teilkristallinem PET, insbesondere Behälter für die Nahrungsmittelindustrie, hergestellt aus der Zusammensetzung nach einem der Ansprüche 1 bis 6.

9. Formkörper nach Anspruch 8, wobei das PET eine Kristallinität im Bereich von 10 bis 50%, bevorzugt von 20 bis 45%, aufweist.

10. Formkörper nach Anspruch 8 oder 9, wobei der Formkörper ein Behälter, insbesondere eine Schale, ein Teller oder ein Becher, mit einer Wandstärke im Bereich von 0,1 bis 2 mm ist.

11. Formkörper nach einem der Ansprüche 8 bis 10, wobei der Formkörper zusätzlich zu der Schicht auf Basis von teilkristallinem PET eine oder mehrere weitere Schichten umfasst, insbesondere eine Siegelschicht und/oder eine Schicht auf Basis von PET, die kein Schichtsilikat enthält.

12. Formkörper nach Anspruch 11, umfassend eine mittlere Schicht auf Basis von teilkristallinem PET, bevorzugt mit einer Schichtdicke von 0,5 bis 1,8 mm, und zwei äußeren Schichten auf Basis von PET ohne Schichtsilikat, bevorzugt mit einer Schichtdicke von 20 bis 100 µm, wobei eine der beiden Außenschichten insbesondere eine Siegelschicht ist.

13. Verfahren zur Herstellung eines Formkörpern auf der Basis von teilkristallinem PET, insbesondere eines Behälters für die Nahrungsmittelindustrie, umfassend die Schritte:
- Extrudieren einer Zusammensetzung nach einem der Ansprüche 1 bis 6, um eine Folie zu erhalten; und
- Thermoformen der Folie, um den Formkörper zu erhalten.

14. Verfahren nach Anspruch 13, wobei die Extrusion bei einer Temperatur von 180 bis 295 °C durchgeführt und die Folie anschließend abgekühlt wird.

15. Verfahren nach Anspruch 13 oder 14, wobei das Thermoformen folgende Schritte umfasst:
- Vorwärmen der Folie, bevorzugt auf einer Temperatur von 110 bis 125 °C;
- Umformen der Folie mittels eines Vorstreckstempels und einer Heißform, die bevorzugt eine Temperatur von 170 bis 185 °C aufweist; und
- Übertragen des Formteils in eine Kaltform, die bevorzugt eine Temperatur von 20 bis 30 °C aufweist, wobei das PET teilweise kristallisiert.

## Claims

1. A composition for the production of moulded parts on the basis of semi-crystalline polyethyleneterephthalate (PET), comprising
- 75 to 98 weight% of at least one PET, which is formed from the monomers terephthalic acid and ethylene glycol, and optionally from one or more further monomers;
- 0.5 to 10 weight% of at least modifier in the form of an epoxide group containing polymer which has a reactivity towards PET;
- 0.5 to 10 weight% of at least one phyllosilicate in particulate form; and
- 0.25 to 5 weight% of at least one polyolefin.

2. The composition of claim 1, comprising
- 1 to 5 weight%, preferably 1 to 3.5 weight%, of the modifier;
- 1 to 7 weight%, preferably 2.5 to 5 weight%, of the phyllosilicate; and
- 1.2 to 3.5 weight% of the polyolefin.

3. The composition of anyone of the preceding claims, wherein the PET contains isophtalic acid, diethylene glycol and/or 1,4-cyclohexane dimethanol as further monomers.

4. The composition of anyone of the preceding claims, wherein the modifier is a glycidyl methacrylate containing polymer, preferably an ethylene-glycidyl methacrylate-copolymer, an ethylene-ethylacrylate-glycidyl methacrylate-terpolymer or an ethylene-butylacrylate-glycidyl methylacrylate-terpolymer.

5. The composition of anyone of the preceding claims, wherein the phyllosilicate comprises talcum, and/or wherein the particles of the phyllosilicate have an average particle size of 2 to 20 µm, preferably of 3 to 7 µm.

6. The composition of anyone of the preceding claims, wherein the polyolefin is a homopolymer, which is preferably selected from polyethylene, in particular LDPE, LLDPE or ULDPE, polypropylene and mixtures thereof.

7. Use of a composition of anyone of the preceding claims for producing moulded parts on the basis of semi-crystalline PET, in particular of containers for the food industry.

8. A moulded part on the basis of semi-crystalline PET, in particular a container for the food industry, produced from the composition of anyone of claims 1 to 6.

9. The moulded part of claim 8, wherein the PET has a crystallinity in the range from 10 to 50%, preferably from 20 to 45%.

10. The moulded part of claim 8 or 9, wherein the moulded part is a container, in particular a tray, a plate or a cup, with a wall thickness in the range from 0.1 to 2 mm.

11. The moulded part of anyone of claims 8 to 10, wherein the moulded part comprises one or more further layers in addition to the layer on the basis of semi-crystalline PET, in particular a sealing layer and/or a layer on the basis of PET which contains no phyllosilicate.

12. The moulded part of claim 11, comprising a middle layer on the basis of semi-crystalline PET, preferably with a layer thickness of 0.5 to 1.8 mm, and to outer layers on the basis of PET without phyllosilicate, preferably with a layer thickness of 20 to 100 µm, wherein one or both outer layers is in particular a sealing layer.

13. A method for producing a moulded part on the basis of semi-crystalline PET, in particular a container for the food industry, comprising the steps:
- extruding a composition of anyone of claims 1 to 6 to obtain a film; and
- thermoforming the film to obtain the moulded parts.

14. The method of claim 13, wherein the extrusion is carried out at a temperature from 180 to 295 °C and the film is subsequently cooled.

15. The method of claim 13 or 14, wherein the thermoforming comprising the following steps:
- preheating the film, preferably to a temperature of 110 to 125 °C;
- moulding the film with a stretch rod and a heated mould which preferably has a temperature of 170 to 185 °C; and
- transferring the moulded part into a chill mould which preferably has a temperature of 20 to 30 °C, wherein the PET partially crystallizes.

## Revendications

1. Composition pour la production de corps moulés à base de polyéthylène-téréphtalate (PET) semi-cristallin, comprenant
- 75 à 98 % en poids d'au moins un PET qui est formé des monomères acide téréphtalique et éthylène glycol, et facultativement d'un ou plusieurs autres monomères ;
- 0,5 à 10 % en poids d'au moins un modificateur sous la forme d'un polymère contenant des groupes époxy qui présente une réactivité envers le PET ;
- 0,5 à 10 % en poids d'au moins un silicate stratifié sous forme particulaire ; et
- 0,25 à 5 % en poids d'au moins une polyoléfine.

2. Composition selon la revendication 1, comprenant
1 à 5 % en poids, de préférence 1 à 3,5 % en poids du modificateur ;
- 1 à 7 % en poids, de préférence 2,5 à 5 % en poids du silicate stratifié ;
et
- 1,2 à 3,5 % en poids de la polyoléfine.

3. Composition selon l'une quelconque des revendications précédentes, dans laquelle le PET contient comme autres monomères de l'acide isophtalique, du diéthylène glycol et/ou du 1,4-cyclohexanediméthanol.

4. Composition selon l'une quelconque des revendications précédentes, dans laquelle le modificateur est un polymère contenant du méthacrylate de glycidyle, de préférence un copolymère d'éthylène-méthacrylate de glycidyle, un terpolymère d'éthylène-acrylate d'éthyle-méthacrylate de glycidyle ou un terpolymère d'éthylène-acrylate de butyle-méthacrylate de glycidyle.

5. Composition selon l'une quelconque des revendications précédentes, dans laquelle le silicate stratifié comprend du talc, et/ou dans laquelle la particule de silicate stratifié présente une taille moyenne de particule de 2 à 20 µm, de préférence de 3 à 7 µm.

6. Composition selon l'une quelconque des revendications précédentes, dans laquelle la polyoléfine est un homopolymère qui est choisi de préférence parmi le polyéthylène, en particulier LDPE, LLDPE ou ULDPE, le polypropylène et des mélanges de ceux-ci.

7. Utilisation d'une composition selon l'une quelconque des revendications précédentes pour la production de corps moulés à base de PET semi-cristallin, en particulier de récipients pour l'industrie alimentaire.

8. Corps moulés à base de PET semi-cristallin, en particulier de récipients pour l'industrie alimentaire, produits à partir de la composition selon l'une quelconque des revendications 1 à 6.

9. Corps moulé selon la revendication 8, dans lequel le PET présente une cristallinité dans la plage de 10 à 50 %, de préférence de 20 à 45 %.

10. Corps moulé selon la revendication 8 ou 9, dans lequel le corps moulé est un récipient, en particulier une coupe, un séparateur ou un gobelet ayant une épaisseur de paroi de 0,1 à 2 mm.

11. Corps moulé selon l'une quelconque des revendications 8 à 10, dans lequel le corps moulé comprend en plus de la couche à base de PET semi-cristallin, une ou plusieurs autres couches, en particulier une couche de scellement et/ou une couche à base de PET qui ne contient pas de silicate stratifié.

12. Corps moulé selon la revendication 11, comprenant une couche médiane à base de PET semi-cristallin, de préférence ayant une épaisseur de couche de 0,5 à 1,8 mm, et deux autres couches à base de PET sans silicate stratifié, de préférence ayant une épaisseur de couche de 20 à 100 µm, dans lequel l'une des deux couches extérieures est en particulier une couche de scellement.

13. Procédé de production d'un corps moulé à base de PET semi-cristallin, en particulier d'un récipient pour l'industrie alimentaire, comprenant les étapes :
- d'extrusion d'une composition selon l'une quelconque des revendications 1 à 6, pour obtenir une feuille ; et
- de thermoformage de la feuille pour obtenir le corps moulé.

14. Procédé selon la revendication 13, dans lequel l'extrusion est réalisée à une température de 180 à 295 °C et la feuille est ensuite refroidie.

15. Procédé selon la revendication 13 ou 14, dans lequel le thermoformage comprend des étapes suivantes :
- préchauffage de la feuille, de préférence à une température de 110 à 125 °C ;
- déformation de la feuille au moyen d'un poinçon de dégrossissage et d'un moule à chaud qui présente de préférence une température de 170 à 185 °C ; et
- transfert de la pièce moulée dans un moule à froid qui présente de préférence une température de 20 à 30 °C, dans lequel le PET cristallise partiellement.
